# EUROPÄISCHE PATENTANMELDUNG

(11) **EP 2 719 530 A1**
(43) Veröffentlichungstag der Anmeldung: **16.04.2014**
(21) Anmeldenummer: 12188369.8
(22) Anmeldetag: 12.10.2012
(51) Int. Cl.: B32B 5/02, B32B 27/12, B32B 27/32, B32B 27/34, B32B 7/12

(54) **Formpressteil und Verwendung einer mehrschichtigen Coextrusionsfolie zur Herstellung des Formpressteils**

(71) Anmelder: Mondi Gronau GmbH, 48599 Gronau (DE)
(72) Erfinder: Boccuto, Domenico, 48703 Stadtlohn (DE)
(74) Vertreter: Albrecht, Rainer Harald

(57) **Zusammenfassung**

Die Erfindung betrifft ein Formpressteil mit einem aus einer Fasermischung aus Naturfasern und Polymerfasern bestehenden Träger (1) und einer auf dem Träger (1) angeordneten polymeren Deckschicht (2). Die Deckschicht (2) besteht aus einer Folie (3), die eine der Faserfläche des Trägers (1) zugewandten Polyolefinschicht (4) und mindestens eine mit dieser coextrudierte Barriereschicht (5) aufweist. Die Barriereschicht (5) der Folie (3) weist erfindungsgemäß einen höheren Schmelzpunkt und/oder einen niedrigeren Schmelzflussindex als die Polyolefinschicht (4) auf und bildet einen geschlossenen Überzug an der Faseroberfläche des Trägers (1).

## Beschreibung

Die Erfindung betrifft ein Formpressteil mit einem aus einer Fasermischung aus Naturfasern und Polymerfasern bestehenden Träger und einer auf dem Träger angeordneten polymeren Deckschicht. Bei dem Formpressteil kann es sich insbesondere um ein Interieur-Bauteil für den Fahrgastraum eines Kraftfahrzeuges handeln.

Interieurbauteile für den Innenraum von Kraftfahrzeugen werden in der Praxis überwiegend aus synthetisch hergestellten Rohstoffen, beispielsweise TPO, PVC, PUR, PC, PMMA oder ABS, hergestellt, die im Spritzgussverfahren verarbeitet werden. Daneben werden Interieurbauteile für den Innenraum von Kraftfahrzeugen auch als Formpressteile unter Verwendung von Naturfasern gefertigt. Bei Bauteilen auf Basis von naturfaserverstärkten Kunststoffen (NFK) werden Naturfasern auf Basis nachwachsender Rohstoffe als Verstärkungsmaterial in eine Polymermatrix eingebettet. Die Bauteile sind besonders wegen ihrer Umweltverträglichkeit, dem Leichtbaupotential, dem Crashverhalten, der Formstabilität und der Isotropie interessant. Aus optischen Gründen und zur Verbesserung der chemischen Beständigkeit, Kratz- und Abriebsbeständigkeit wird auf den als Formpressteil gefertigten Träger im Nachhinein eine Dekorfolie auf Basis von PVC, PUR oder TPO aufkaschiert. Es muss eine relativ dicke Folie mit einer Folienstärke zwischen 400 µm bis 2000 µm verwendet werden, um eine optisch ansprechende Applikation zu ermöglichen. Der Einsatz einer nachträglich aufkaschierten Folie widerspricht dem Nachhaltigkeitsgedanken und dem ökologischen Aspekt des Einsatzes von Naturfasern. Darüber hinaus erhöht sich durch die Applikation einer schweren Dekorfolie auch das Bauteilgewicht des Formpressteils.

In DE 10 2009 041 683 A1 wird ein Bauteil beschrieben, das als Innenverkleidungsteil für ein Kraftfahrzeug eingesetzt wird. Das Bauteil weist einen Träger auf, der auf Basis von Fasermaterial hergestellt wird. Dabei wird zunächst eine Mischung aus Naturfasern und Polymerfasern hergestellt. Die Fasern werden mittels Heißpressen zu dem Trägerteil geformt. Danach wird das Trägerteil mit einer dicken Dekorfolie auf Basis von PVC (Polyvinylchlorid) oder TPO (Thermoplast-Olefin) kaschiert.

Vor diesem Hintergrund liegt der Erfindung die Aufgabe zugrunde, ein Formpressteil mit den eingangs beschriebenen Merkmalen anzugeben, welches eine möglichst dünne polymere Deckschicht aufweist und sich auf einfache und kostengünstige Weise herstellen lässt.

Gegenstand der Erfindung und Lösung dieser Aufgabe ist ein Formpressteil nach Anspruch 1.

Das Formpressteil weist einen aus einer Fasermischung aus Naturfasern und Polymerfasern bestehenden Träger und eine auf dem Träger angeordnete polymere Deckschicht auf. Erfindungsgemäß besteht die Deckschicht aus einer Folie, die eine der Faserfläche des Trägers zugewandte Polyolefinschicht und mindestens eine mit dieser coextrudierte Barriereschicht aufweist. Dabei weist die Barriereschicht der Folie erfindungsgemäß einen höheren Schmelzpunkt und/oder einen niedrigeren Schmelzflussindex auf als die Polyolefinschicht und bildet einen geschlossenen Überzug an der Faseroberfläche des Trägers. Der Schmelzflussindex (MFI) kann beispielsweise nach ISO 1133 bestimmt werden. Die Folie und eine aus der Fasermischung bestehende Fasermatte werden gemeinsam im Thermokompressionsverfahren einander verpresst und dabei geformt. Die Verbindung zwischen der Folie und dem faserförmigen Träger ist klebstofffrei und beruht darauf, das der Polyolefinanteil des Trägers aufschmilzt und einem stoffschlüssigen Verbund mit der Polyolefinschicht der angrenzenden Folie eingeht. Die Barriereschicht der Deckschicht erfüllt dabei eine erfindungswesentliche Funktion. Sie verhindert, dass die Folie beim Erhitzen und Formpressen zu stark in die Fasermatrix des Naturfasern enthaltenden Trägers einsinkt und dadurch Fasern an der Oberfläche des Formpressteils ungeschützt den Umwelteinwirkungen ausgesetzt sind, und sie stellt sicher, dass die aus der Folie gebildete Deckschicht einen geschlossenen Überzug mit einer im Wesentlichen fehlstellenfreien Oberflächen bildet. Die Oberfläche des Formpressteils bildet eine dauerhafte Versiegelung, die gegen Wasser und Reinigungsmittel beständig ist und sich auch durch eine gute Kratz- und Abriebsbeständigkeit auszeichnet.

Die Deckschicht des erfindungsgemäßen Formpressteils zeichnet sich durch eine geringe Schichtstärke von weniger als 200 µm aus. Vorzugsweise hat die Deckschicht eine Schichtstärke zwischen 20 µm und 150 µm. Sie versiegelt die Oberfläche des Naturfaser enthaltenen Trägers dauerhaft und verleiht dem Formpressteil eine optisch ansprechende Oberfläche.

Gemäß einer bevorzugten Ausführung der Erfindung ist der Schmelzpunkt der Barriereschicht höher als der Schmelzpunkt der Polymerfasern des Trägers. Dadurch, dass der Schmelzpunkt der coextrudierten Barriereschicht oberhalb der Prozesstemperatur bei der Herstellung des Formpressteils liegt, verbleibt die Folie an der Oberfläche und bildet einen die Faseroberfläche überdeckenden Film. Für die Barriereschicht eignen sich insbesondere Polymere mit einem DSC (Differential Scanning Calorimetry) Schmelzpeak von mehr als 200 °C. Differential Scanning Calorimetry (DSC) ist ein thermoanalytisches Verfahren, das auch als dynamische Differenzkalorimetrie bezeichnet wird. Bei einer besonders vorteilhaften Ausführung der Erfindung besteht die Barriereschicht aus einem Polyamid oder einem Polyamid-Copolymer. Durch Mehrschichtextrusion eines Polyolefin mit einem Polyamid entsteht eine Folie, die eine Barriereschicht aufweist, welche einem zu tiefen Einsinken der Folie in die Naturfasermatrix des Trägers Widerstand bietet.

Alternativ zum Polyamid kann innerhalb der Coextrusionsfolie auch ein Polyolefin mit sehr niedrigem Schmelzflussindex (MFI) zum Einsatz kommen. Hier beruht der Effekt der Barriere gegen das Einsinken in die Naturfasermatrix auf einer hohen Schmelzviskosität.

Eine weitere vorteilhafte Ausgestaltung des erfindungsgemäßen Formpressteils sieht vor, dass die Deckschicht eine polyolefinische Außenschicht aufweist und dass die Barriereschicht zwischen der an dem Träger angrenzenden Polyolefinschicht und der polyolefinischen Außenschicht angeordnet ist. Zwischen der Barriereschicht und der angrenzenden Polyolefinschicht bzw. der angrenzenden polyolefinischen Außenschicht ist zweckmäßig eine Haftvermittlerschicht vorgesehen, wobei die Haftvermittlerschicht vorzugsweise ein Maleinsäureanhydrid gepfropftes Polyolefin umfasst. Insbesondere eignet sich ein Maleinsäureanhydrid gepfropftes Polypropylen (MAH-g-PP). Der Einsatz von Maleinsäureanhydrid gepfropften Polypropylen (MAH-g-PP) führt zu einer Verbesserung der Haftung am faserförmigen Träger. Der Pfropfungsgrad, das heißt, das Verhältnis von Masse des gepfropften MAH zur Masse des MAH-g-PP, liegt zwischen 0,01 und 90 %, insbesondere zwischen 0,1 und 10 %, besonders bevorzugt zwischen 3 und 8 %. Durch den Einsatz von geeigneten Haftvermittlern auf Basis von Maleinsäureanhydrid gepfropften Polyolefinen (z. B. MAH-g-PP) lassen sich Mehrschichtfolien mit polyolefinischen Außenschichten herstellen. Dadurch wird eine gute Haftung zum Fasermaterial auf der einen Seite sowie eine robuste Nutzoberfläche auf der anderen Seite gewährleistet.

Als Naturfasern des Trägerteils eignen sich insbesondere Hanf, Kenaf, Flachs, Jute und Sisal. Der Anteil an Naturfasern im Träger kann zwischen 30 Gew.-% und 80 Gew.-% betragen, wobei ein Anteil von 40 Gew.-% und 60 Gew.-% bevorzugt ist.

Gegenstand der Erfindung ist auch die Verwendung einer mehrschichtigen Coextrusionsfolie nach Anspruch 9 zur Herstellung eines Formpressteils, welches einem aus einer Fasermischung aus Naturfasern und Polymerfasern bestehenden Träger und eine durch die Coextrusionsfolie gebildete Deckschicht aufweist und durch gemeinsames Erhitzen und Verpressen einer aus der Fasermischung bestehenden Fasermatte und der Coextrusionsfolie geformt wird. Die Coextrusionsfolie weist erfindungsgemäß zumindest eine Polyolefinschicht und eine Barriereschicht aus einem Polymer mit einem höherem Schmelzpunkt und/oder einem niedrigeren Schmelzflußindex als die Polyolefinschicht auf.

Der Schmelzpunkt der Barriereschicht ist vorzugsweise höher als der Schmelzpunkt der Polymerfasern der Fasermatte. Dadurch, dass der Schmelzpunkt der coextrudierten Barriereschicht oberhalb der jeweiligen Prozesstemperatur zur Herstellung des Trägerteils liegt, verbleibt die Folie an der Oberfläche und bildet einen durchgehenden Film bzw. Überzug. Für die Barriereschicht eignen sich insbesondere Polymere mit einem DSC (Differential Scanning Calorimetry) Schmelzpeak von mehr als 200 °C. Gemäß einer besonders vorteilhaften Ausführung der Erfindung besteht die Barriereschicht der Coextrusionsfolie aus einem Polyamid. Durch Mehrschichtextrusion eines Polyolefin mit einem Polyamid entsteht eine Folie, mit einer Barriereschicht, die einem zu tiefen Einsinken der Folie in die Naturfasermatrix des Trägers ausreichenden Widerstand bietet. Der Schmelzpunkt der coextrudierten Polyamidschicht liegt oberhalb der Prozesstemperatur, die bei der Herstellung des Formpressteils zur Anwendung kommt. Vorzugsweise besteht die Barriereschicht aus einem der Polyamide 6, 6.6, 6.10, 6.11, 6.12 oder einer Mischung der vorgenannten Polyamide. Als Polyolefin kann Polypropylen und/oder Polyethylen eingesetzt werden, wobei sich insbesondere Homo-, Random- oder Blockcopolymere des Polypropylens mit Ethylen eignen.

Bei einer besonders vorteilhaften Variante der Erfindung weist die Coextrusionsfolie mindestens eine Haftvermittlerschicht zwischen der Barriereschicht und einer angrenzenden polyolefinischen Schicht auf. Die Haftvermittlerschicht umfasst vorzugsweise ein Maleinsäureanhydrid gepfropftes Polyolefin, wobei sich insbesondere Maleinsäureanhydrid gepfropftes Polypropylen (MAH-g-PP) eignet.

Der Einsatz von Maleinsäureanhydrid gepfropften Polypropylen (MAH-g-PP) führt auch zu einer Verbesserung der Haftung am faserförmigen Träger. Der Pfropfungsgrad ist das Verhältnis von Masse des gepfropften MAH zur Masse des MAH-g-PP. Bevorzugte Pfropfungsgrade des Maleinsäureanhydrid gepfropften Polymers liegen zwischen 0,01 und 90 %, insbesondere zwischen 0,1 und 10 %, besonders bevorzugt zwischen 3 und 8 %. Durch den Einsatz von geeigneten Haftvermittlern auf Basis von Maleinsäureanhydrid gepfropften Polyolefinen (z. B. MAH-g-PP) lassen sich Mehrschichtfolien mit polyolefinischen Außenschichten herstellen. Dabei wird sowohl eine gute Haftung zum Fasermaterial als auch eine robuste Nutzoberfläche auf der anderen Seite gewährleistet.

Alternativ zu einem Polyamid kann innerhalb der Coextrusionsfolie als Barriereschicht auch ein Polyolefin mit einem niedrigen MFI (Melt-Flow-Index) zum Einsatz kommen. Der MFI ist ein Schmelzflussindex zur Charakterisierung des Fließverhaltens von Thermoplasten bei bestimmten Druck- und Temperaturbedingungen. Vorzugsweise eignen sich als Barriereschicht Polyolefine mit einem MFI von kleiner als 4,5, insbesondere kleiner als 1,0 gemessen bei Standardbedingungen. Hier beruht der Effekt der Barriere gegen das Einsinken in die Naturfasermatrix auf der hohen Schmelzviskosität.

Je nach Anwendung kann die Coextrusionsfolie zudem Zuschlagstoffe in Form von Pigmenten und/oder UV-Schutzmitteln und/oder Thermostabilisatoren und/oder Antiblockmitteln und/oder Antimattierungsmitteln und/oder Gleitmitteln enthalten. Die Coextrusionsfolie kann ferner bedruckt sein und/oder an ihrer Außenseite eine Lackschicht aufweisen. Die Coextrusionsfolie kann transparent sein und an ihrer dem Formpressteil zugewandeten Seite bedruckt werden. So ist der Druck geschützt und von außen sichtbar.

Weitere Merkmale und Vorteile ergeben sich anhand der Beschreibung von Ausführungsbeispielen.

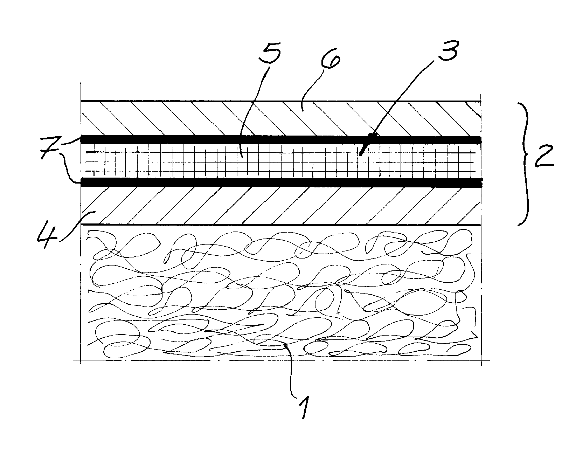

Die Figur 1 zeigt in einer schematischen Schnittdarstellung einen Ausschnitt aus einem Formpressteil. Das Formpressteil weist einen aus einer Fasermischung aus Naturfasern und Polypropylenfasern bestehenden Träger 1 sowie eine auf dem Träger 1 angeordnete polymere Deckschicht 2 auf. Die Deckschicht 2 besteht aus einer Folie 3, die eine der Faserfläche des Trägers 1 zugewandte Polyolefinschicht 4 und mindestens eine mit dieser coextrudierte Barriereschicht 5 aufweist. Die Barriereschicht 5 der Folie 3 weist einen höheren Schmelzpunkt auf als die Polyolefinschicht 4 und bildet einen geschlossenen Überzug an der Faseroberfläche des Trägers 1.

Im Ausführungsbeispiel besteht der Träger 1 aus einer Fasermischung aus Polypropylenfasern und Naturfasern, wobei als Naturfasern insbesondere Hanf, Kenaf, Flachs, Jute und Sisal eingesetzt werden können und der Anteil der Naturfasern in der Fasermischung zwischen 40 und 60 Gew.-% liegt. Durch Erhitzen wird die Fasermatte plastifiziert und formbar gemacht. Durch gemeinsames Erhitzen und Verpressen erhält das Formpressteil seine Form. Alternativ kann das Formpressteil auch durch ein Fließpressverfahren hergestellt werden.

Die Folie 3 ist klebstoffrei durch Aufschmelzen des Polymeranteils im Träger mit dem faserförmigen Träger 1 verbunden und weist im Ausführungsbeispiel eine polyolefinische Außenschicht 6 auf. Die zwischen den Polyolefinschichten 4, 6 angeordnete Barriereschicht 5 hat einen höheren Schmelzpunkt als die Polyolefinschichten 4, 6 und besteht im Ausführungsbeispiel aus einem Polyamid, vorzugsweise aus Polyamid 6. Zwischen den Polyolefinschichten 4, 6 und der Barriereschicht 5 sind noch Haftvermittlerschichten 7 vorgesehen, die aus einem Maleinsäureanhydrid gepfropften Polypropylen (MAH-g-PP) bestehen können.

Die Coextrusionsfolie 3 hat eine Gesamtfolienstärke zwischen 25 und 200 µm, wobei die Barriereschicht 5 auf Basis von Polyamid eine Schichtstärke zwischen 30 µm und die polyolefinischen Schichten 4, 6 jeweils eine Stärke zwischen 10 µm und 120 µm aufweisen. Die Haftvermittlerschichten 7 bewegen sich im Bereich zwischen 2 und 10 µm.

Die Barriereschicht 5 auf Basis von Polyamid verhindert, dass die Folie 3 bei einer Verbindung mit dem faserförmigen Träger 1 zu stark in die Fasermatrix einsinkt und bewirkt, dass die Folie 3 eine unversehrte Oberfläche des Formpressteils bildet.

Im Folgenden wird anhand weiterer Beispiele der Schichtenaufbau von Mehrschichtenextrusionsfolien beschrieben, die zur Herstellung eines Formpressteils geeignet sind, welches einem aus einer Fasermischung aus Naturfasern und Polymerfasern bestehenden Träger und eine durch die Folie gebildete Deckschicht aufweist. Die in den nachfolgenden Beispielen genannten mehrschichtigen Folien können durch gemeinsames Erhitzen und Verpressen mit einer aus der Fasermischung vorgefertigten Fasermatte zu entsprechenden Formpressteilen geformt werden.

### Beispiel 1

| |
|---|
| Außenschicht PA, z. B. PA6 |
| HVM, z.B. MAH-g-PP |
| Verbindungsschicht PP |

| | |
|---|---|
| Gesamtfolienstärke: | 25 - 150 µm |
| Polyamidschicht: | 2 - 30 µm |
| Haftvermittlerschicht: | 2 - 10 µm |
| Verbindungsschicht PP: | 10 - 120 µm |

### Beispiel 2

| |
|---|
| Außenschicht HVM, z. B. MAH-g-PP |
| PA-Schicht, z. B. PA6 |
| Verbindungsschicht HVM, z. B. MAH-g-PP |

| | |
|---|---|
| Gesamtfolienstärke: | 25 - 150 µm |
| Außenschicht HVM: | 2 - 20 µm |
| PA-Schicht: | 2 - 30 µm |
| Verbindungsschicht HVM: | 10- 60 µm |

Alternativ zu einer Barriereschicht aus einem Polyamid kann auch innerhalb der Coexfolie ein Polyolefin mit sehr niedrigem MFI zum Einsatz kommen. Hier beruht der Effekt der Barriere gegen das Einsinken in die Naturfasermatrix auf der hohen Schmelzviskosität. Die folgenden Beispiele zeigen Polypropylen-Coexvarianten:

### Beispiel 3

| |
|---|
| Außenschicht PP3 (MFI > 4.0) |
| PP2 (MFI 1.0 - 4.0) |
| Verbindungsschicht PP1 (MFI < 1.0) |

Der Schmelzflussindex MFI wurde nach ISO 1133 bei 230 °C/2,16 kg bestimmt.

| | |
|---|---|
| Gesamtfolienstärke: | 20 - 200 µm |
| PP3: | 5 - 50 µm |
| PP2: | 10 - 100 µm |
| PP1: | 5 - 50 µm |

### Beispiel 4

| |
|---|
| PP 1 |
| PP 2/3 |

Die Angaben PP 1, PP2 und PP3 beziehen sich auf die Polymere des Beispiels 3. Die Verbindungsschicht kann entweder PP2 oder PP3 aus Beispiel 3 sein.

| | |
|---|---|
| Gesamtfolienstärke: | 20 - 200 µm |
| PP1: | 5 - 50 µm |
| PP2: | 10 - 100 µm |
| PP3: | 5 - 50 µm |

### Beispiel 5

Die Angaben PP1, PP2 und PP3 beziehen sich auf die Polymere des Beispiels 3. Folgende Kombinationen sind möglich:

| | | | | |
|---|---|---|---|---|
| PP2 | | PP3 | | PP3 |
| PP1 | | PP2 | | PP1 |
| PP2 | | PP3 | | PP3 |

| | |
|---|---|
| Gesamtfolienstärke: | 20 - 200 µm |
| PP1: | 5 - 50 µm |
| PP2: | 10 - 100 µm |
| PP3: | 5 - 50 µm |

## Patentansprüche

1. Formpressteil mit einem aus einer Fasermischung aus Naturfasern und Polymerfasern bestehenden Träger (1) und einer auf dem Träger (1) angeordneten polymeren Deckschicht (2),
wobei die Deckschicht (2) aus einer Folie (3) besteht, die eine der Faserfläche des Trägers (1) zugewandte Polyolefinschicht (4) und mindestens eine mit dieser coextrudierte Barriereschicht (5) aufweist und
wobei die Barriereschicht (5) der Folie (3) einen höheren Schmelzpunkt und/oder einen niedrigeren Schmelzflussindex aufweist als die Polyolefinschicht (4) und einen geschlossen Überzug an der Faseroberfläche des Trägers (1) bildet.

2. Formpressteil nach Anspruch 1, **dadurch gekennzeichnet, dass** die Deckschicht (2) eine Schichtstärke von weniger als 200 µm aufweist.

3. Formpressteil nach Anspruch 1 oder 2, **dadurch gekennzeichnet, dass** die Deckschicht (2) eine Schichtstärke zwischen 20 µm und 150 µm aufweist.

4. Formpressteil nach einem der Ansprüche 1 bis 3, **dadurch gekennzeichnet, dass** der Schmelzpunkt der Barriereschicht (5) größer als 200 °C ist.

5. Formpressteil nach Anspruch 4, **dadurch gekennzeichnet, dass** die Barriereschicht (5) aus einem Polyamid oder einem Polyamid-Copolymer besteht.

6. Formpressteil nach einem der Ansprüche 1 bis 5, **dadurch gekennzeichnet, dass** die Deckschicht (2) eine polyolefinische Außenschicht (6) aufweist und dass die Barriereschicht (5) zwischen der an dem Träger (1) angrenzenden Polyolefinschicht (4) und der polyolefinischen Außenschicht (6) angeordnet ist.

7. Formpressteil nach einem der Ansprüche 1 bis 6, **dadurch gekennzeichnet, dass** zwischen der Barriereschicht (5) und der angrenzenden Polyolefinschicht (4) eine Haftvermittlerschicht (7) vorgesehen ist.

8. Formpressteil nach Anspruch 7, **dadurch gekennzeichnet, dass** die Haftvermittlerschicht (7) ein Maleinsäureanhydrid gepfropftes Polyolefin umfasst.

9. Verwendung einer mehrschichtigen Coextrusionsfolie (3), die mindestens eine Polyolefinschicht (4) und eine Barriereschicht (5) aus einem Polymer mit einem höheren Schmelzpunkt und/oder einem niedrigeren Schmelzflussindex als die Polyolefinschicht (4) aufweist, zur Herstellung eines Formpressteils, welches einen aus einer Fasermischung aus Naturfasern und Polymerfasern bestehenden Träger (1) und eine durch die Coextrusionsfolie (3) gebildete Deckschicht (2) aufweist und durch gemeinsames Erhitzten und Verpressen eine aus der Fasermischung bestehenden Fasermatte und der Coextrusionsfolie (3) geformt wird.

10. Verwendung der Coextrusionsfolie (3) nach Anspruch 9, **dadurch gekennzeichnet, dass** die Coextrusionsfolie (3) eine Dicke zwischen 20 µm und 150 µm aufweist.

11. Verwendung der Coextrusionsfolie (3) nach Anspruch 9 oder 10, **dadurch gekennzeichnet, dass** der Schmelzpunkt der Barriereschicht (5) größer als 200 °C ist.

12. Verwendung der Coextrusionsfolie (3) nach einem der Ansprüche 9 bis 11, **dadurch gekennzeichnet, dass** die Barriereschicht (5) aus einem Polyamid oder einem Polyamid-Copolymer besteht.

13. Verwendung der Coextrusionsfolie (3) nach Anspruch 12, **dadurch gekennzeichnet, dass** die aus einem Polyamid oder Polyamid-Copolymer bestehende Barriereschicht (5) eine Schichtdicke von 2 µm bis 50 µm aufweist.

14. Verwendung der Coextrusionsfolie (3) nach einem der Ansprüche 9 bis 13, **dadurch gekennzeichnet**, das die Coextrusionsfolie (3) eine polyolefinische Außenschicht (6) aufweist und dass die Barriereschicht (5) zwischen der polyolefinischen Außenschicht (6) und der Polyolefinschicht (4) angeordnet ist.

15. Verwendung der Coextrusionsfolie (3) nach einem der Ansprüche 9 bis 14, **dadurch gekennzeichnet**, das zwischen der Barriereschicht (5) und einer angrenzenden polyolefinischen Schicht (4, 6) eine Haftvermittlerschicht (7) vorgesehen ist.

16. Verwendung der Coextrusionsfolie (3) nach Anspruch 15, **dadurch gekennzeichnet, dass** die Haftvermittlerschicht (7) ein Maleinsäureanhydrid gepfropftes Polyolefin umfasst.

17. Verwendung der Coextrusionsfolie (3) nach einem der Ansprüche 9 bis 16, **dadurch gekennzeichnet, dass** die Polyolefinschicht (4) aus einem Polypropylen oder einem Blockcopolymer des Propylen mit Ethylen besteht.

18. Verwendung der Coextrusionsfolie (3) nach einem der Ansprüche 9 bis 17, **dadurch gekennzeichnet, dass** die Coextrusionsfolie (3) Zuschlagsstoffe in Form von Pigmenten, UV- und Thermostabilisatoren, Antiblock-, Mattierungs- und Gleitmittel enthält.

19. Verwendung der Coextrusionsfolie (3) nach einem der Ansprüche 9 bis 18, **dadurch gekennzeichnet, dass** die Coextrusionsfolie (3) bedruckt ist und/ oder an ihrer Außenseite eine Lackschicht aufweist.
